# EUROPÄISCHE PATENTANMELDUNG

(11) **EP 1 930 642 A2**
(43) Veröffentlichungstag der Anmeldung: **11.06.2008**
(21) Anmeldenummer: 07022850.7
(22) Anmeldetag: 26.11.2007
(51) Int. Cl.: F16L 21/03, F16L 21/035, F16L 21/06, F16L 37/088, F16L 37/091, F16L 37/098

(54) **Sicherungselement**

(30) Priorität: 06.12.2006 DE 102006057417
(71) Anmelder: LuK Lamellen und Kupplungsbau Beteiligungs KG, 77815 Bühl (DE)
(72) Erfinder: Ort, Konstantin, 76133 Karlsruhe (DE); Haas, Wolfgang, 77815 Bühl (DE)

(57) **Zusammenfassung**

Die Erfindung betrifft ein Sicherungselement (15) zur Verbindung von Leitungen, insbesondere Leitungen für Kupplungsausrück- und Bremssysteme in Fahrzeugen, bei denen ein Endbereich als Hülsenteil (4) und ein Endbereich als rotationssymmetrisches Steckteil (11) ausgebildet und am Steckteil über einen Sicherungsbereich mindestens ein Anschlag definiert wird, der zumindest zu einem am Hülsenteil vorgesehenen Anschlag axial beabstandet ist und entweder der Endbereich des Hülsenteils oder der des Steckteils ein Dichtelement aufweist. Das Sicherungselement (15) dient dabei zur axialen Fixierung von Steck- und Hülsenteil im Verbindungsbereich, indem es eine Verbindung zwischen dem Innendurchmesser des Hülsenteils und dem Außendurchmesser des Sicherungsbereichs des Steckteils dadurch hergestellt, dass es am mindestens einen Anschlag des Hülsenteils und am mindestens einen Anschlag des Steckteils anliegt oder beide Anschläge umhüllt.

## Beschreibung

Die Erfindung betrifft ein Sicherungselement zur Verbindung von Leitungen, insbesondere Leitungen für Kupplungsausrück- und Bremssysteme in Fahrzeugen, bei denen ein Endbereich als Hülsenteil und ein Endbereich als rotationssymmetrisches Steckteil ausgebildet und am Steckteil mindestens ein Anschlag vorgesehen ist, der zu mindestens einem am Hülsenteil vorgesehenen Anschlag axial beabstandet ist.

In der DE 199 12 351 A1 wird eine Lösung für eine Befestigung eines als Hülsenteil ausgebildeten Endbereichs einer Anschlussleitung an einem als Steckteil ausgebildeten Endbereich eines Anschlussstutzens beschrieben. Der Verbindungsbereich, der im Endbereich der Anschlussleitung die Funktion eines Halteelements ausübt, wird durch das Einsetzen eines elastischen Einlegeteils in die Mantelfläche dieses Halteelements abgedichtet. Zur Bildung eines Anschlages des elastischen Einlegeteils im Halteelement ist das Halteelement an seinem freien Ende mit einer Einschnürung versehen, die hinter dem Dichtmittel eingreift. Beim axialen Zusammenfügen dieses Halteelements mit dem konisch geformten Endbereich des Anschlussstutzens drückt der größte Durchmesser des Konus des Anschlussstutzens in eine im Halteelement und somit auch im elastischen Einlegeteil vorgesehene Rille, so dass der Anschlussstutzen in diesem damit axial fixiert und dabei gleichzeitig abgedichtet wird.

Weiterhin wird in der DE 195 29 830 C1 eine Lösung für die Verbindung einer Leitung mit einem Geberzylinder und einem Ausgleichsbehälter einer hydraulischen Betätigungseinrichtung beschrieben. Bei dieser Lösung wird das Steckteil, das das konisch ausgebildete Ende eines Geberzylinders oder eines Ausgleichsbehälters darstellt, mit einer als Wellrohr ausgebildeten Leitung verbunden. Der Endbereich dieses Wellrohrs weist ein als Hülsenteil fungierendes Anschlussstück auf, das einen sich konisch erweiternden Abschnitt umfasst, der als Dichtabschnitt dient und mit einer radial nach innen abgesetzten Ringschulter ausläuft, an die sich ein Führungsabschnitt anschließt. Der sich konisch erweiternde Abschnitt, die Ringschulter und der Führungsabschnitt sind dabei einstückig mit dem aus Kunststoff bestehenden Wellrohr ausgeführt. Bei der Montage des Anschlussstutzens mit dem Anschlussstück liegt der sich konisch erweiternde Abschnitt des Anschlussstücks der Verbindungsleitung bündig an dem sich konisch verjüngenden Abschnitt des Anschlussstutzens an. Die hierfür erforderlichen Dichtkräfte werden durch eine geringe elastische Aufweitung und Längung des sich konisch erweiternden Abschnitts des Anschlussstücks bereitgestellt. Die einen Hinterschnitt ausbildende Ringschulter des Anschlussstücks hintergreift den Absatz des Anschlussstutzens, um das Anschlussstück in diesem leicht verspannten Zustand auf dem Anschlussstutzen zu halten. Aus diesem Grunde ist der Innendurchmesser der Ringschulter des Anschlussstücks kleiner als der größte Außendurchmesser des sich konisch verjüngenden Abschnitts des Anschlussstutzens.

Aus dem Stand der Technik sind weiterhin Lösungen für Anschlussmöglichkeiten für Leitungen aus Kunststoff mit Anschlussstutzen bekannt, bei denen in eine umlaufende Rille im Endbereich der Leitung ein Dichtelement in Form eines O-Rings eingelegt ist. Dieser O-Ring hat im Bereich der Verbindungsstelle sowohl eine Dichtfunktion als auch die Funktion die Leitung in axialer Richtung auf dem Anschlussstutzen zu fixieren.

Zur Gewährleistung dieser Funktionen ist das Dichtelement bzw. dessen Fixierung entsprechend auszubilden. Bei der Montage der Leitungsenden an den Stutzen eines Geberzylinders und dem eines Nachlaufbehälters kommt es bei den beschriebenen Lösungen aufgrund der für das Zusammendrücken des Dichtelements erforderlichen radialen Kräfte zu sehr großen Montagekräften. Außerdem kann es bei der Montage zu einer Beschädigung des Dichtelements kommen, wodurch eine zuverlässige Dichtwirkung nicht mehr gewährleistet ist.

Daher ist es Aufgabe der Erfindung, eine Lösung für eine Verbindung eines Steckteils mit einem Hülsenteil vorzuschlagen, bei der die Funktionen Abdichten und Fixieren in radialer und axialer Richtung nicht mittels eines einzigen Bauelements realisiert werden.

Diese Aufgabe wird für eine Verbindung eines Steckteils mit einem Hülsenteil mittels eines Sicherungselements mit den Merkmalen der Ansprüche 1 und 14 gelöst.

Danach wird dieses Sicherungselement so in den mit mindestens einem Anschlag versehenen Endbereich des Hülsenteils und den ebenfalls mit mindestens einem Anschlag versehenen, im Endbereich des Steckteils vorgegebenen Sicherungsbereich eingebracht, dass dieses zur Herstellung einer Verbindung zwischen beiden Bauelementen den Abstand zwischen beiden Anschlägen überwindet. Auf diese Weise wird die Funktion des axialen Fixierens des als Hülsenteil ausgebildeten Endbereichs der Leitung auf dem als Stutzen ausgebildeten Steckteil von einem zusätzlichen Bauelement, dem Sicherungselement, übernommen. Die radiale Führung der inneren Mantelfläche der Leitung auf der Mantelfläche des Stutzens erfolgt dabei über Führungsflächen, die durch den Innen- und Außendurchmesser der zu verbindenden Teile gebildet werden, in diesem Fall durch Stutzen und Leitung. Die axiale Fixierung beider Bauteile erfolgt dadurch, dass entweder das Hülsenteil so ausgebildet ist, dass es hinter einer auf dem Steckteil vorgesehenen Erhebung, die beispielsweise durch das auf diesem aufgebrachten Dichtelement verursacht werden kann, einschnappt oder das Sicherungselement so in der Ausnehmung des Steckteils angeordnet ist, dass es mit seiner Mantelfläche über den Durchmesser des Steckteils hinausragt und somit einen Rastring für das Hülsenteil bildet, das hinter diesem Rastring einschnappen kann.

Durch diese Lösung wird das Fixieren in axialer Richtung von dem Sicherungselement realisiert und die Dichtfunktion von einem Dichtelement. Dadurch, dass das Dichtelement bei der Montage nicht stark verpresst wird, wird die Montagekraft reduziert. Außerdem wird das Risiko der Beschädigung des Dichtelements herabgesetzt.

In einer vorteilhaften Ausbildung der Erfindung wird das Sicherungselement aus einem geschlitzten, scheibenförmigen, aus einem elastischen Material bestehenden Grundkörper gebildet, dessen Innendurchmesser dem Außendurchmesser des Steckteils angepasst ist. Allerdings ist es eben so möglich, dass der Außendurchmesser dem Innendurchmesser der Leitung angepasst ist, oder sich beide Durchmesser bei der Montage ändern. Der Schlitz bis zum Innendurchmesser in Verbindung mit der Elastizität des Materials lässt eine radiale Aufweitung der Scheibe zu. Auf diese Weise kann das Sicherungselement bereits vor der Montage auf dem Steckteil aufgeschoben werden.

In einer besonders vorteilhaften Ausgestaltung der Erfindung besteht das Sicherungselement aus einer in Längsrichtung aufgeschnittenen Hülse, die konisch ausgebildet ist. Dabei ist die Breite des Schlitzes im Sicherungselement so zu wählen, dass beim Zusammendrücken bzw. bei Einwirkung radialer Kräfte auf die Mantelfläche der Hülse der kleine Durchmesser des Konus dem Außendurchmesser im Sicherungsbereich des Steckteils angepasst ist. Die Länge der Hülse ist so zu wählen, dass sie der Breite der im Steckteil eingebrachten Nut bzw. der Größe des Sicherungsbereiches angepasst ist. Zweckmäßigerweise ist dieses Sicherungselement ebenfalls aus Kunststoff hergestellt.

Zur Veränderung der Steifigkeit des Sicherungselements während des Montagevorganges verfügt dieses am Außendurchmesser über mehrere über den Umfang verteilt angeordnete Ausnehmungen. Ebenso gut können Ausnehmungen auch am Innendurchmesser des Sicherungselements vorgesehen sein. Die Ausnehmungen sowohl am Innen- als auch am Außendurchmesser können beispielsweise zacken- bzw. schlitz- oder halbkreisförmig ausgebildet sein. Dabei ist jedoch zu beachten, dass die Summe der verbleibenden Stege insbesondere am Innendurchmesser mit der Größe des Außendurchmessers im Sicherungsbereich des Steckteils korrespondiert.

Die sowohl am Innen- als auch am Außendurchmesser des Sicherungselements eingebrachten Ausnehmungen können in einer vorteilhaften Weiterbildung der Erfindung so angeordnet sein, dass sie auf dem gleichen Radius liegen und entgegengesetzt gerichtet sind. Eine andere Möglichkeit wäre die Ausnehmungen so anzuordnen, dass jeweils eine Ausnehmung am Innendurchmesser einem Steg zwischen zwei Ausnehmungen am Außendurchmesser zugeordnet ist.

Zur Realisierung einer definierbaren Steifigkeit schlägt die erfindungsgemäße Lösung vor einen metallischen Werkstoff für das Sicherungselement zu wählen. Allerdings ist es auch möglich zur Kostenreduzierung das Sicherungselement aus organischem Werkstoff, wie Kunststoff, herzustellen.

Die Aufgabe der Erfindung wird weiterhin durch eine Verbindung eines Steckteils mit einem Hülsenteil mittels eines Sicherungselements gelöst, das durch eine Umhüllung eine Verbindung der axial beabstandeten Anschläge der entsprechend vorbereiteten Endbereiche von Steck- und Hülsenteil hergestellt.

Zur Reduzierung von Kosten sieht eine besonders vorteilhafte Ausgestaltung der Erfindung vor, das Sicherungselement aus einem Drahtgebilde herzustellen, das so aufgebaut ist, dass sowohl das Steck- als auch das Hülsenteil von radial umgreifenden Drahtabschnitten umhüllt werden, und diese radial verlaufenden Drahtabschnitte mit axial zwischen diesen verlaufenden Drahtabschnitten verbunden sind.

In einer vorteilhaften Ausgestaltung der Erfindung wird das Sicherungselement aus einem ringförmigen Grundkörper gebildet, von dessen einen Stirnseite ausgehend in axialer Richtung mehrere Rasthaken verlaufen. Dabei ist es vorteilhaft, wenn der Innendurchmesser des Grundkörpers des Sicherungselements dem größten Durchmesser von Hülsen- und /oder Steckteil angepasst ist.

Eine weitere vorteilhafte Ausgestaltung sieht vor, dass das Sicherungselement aus einer in Längsrichtung geschlitzten, aus elastischem Material bestehenden Hülse gebildet wird. Diese Hülse verfügt über beidseitig nach innen gerichtete Bunde. Diese Bunde können allerdings auch ebenso gut aus mehreren Einzelsegmenten gebildet werden. Zur Erzeugung einer Vorspannung ist es jedoch unbedingt erforderlich, dass mindestens einer dieser Bunde einen Winkel zur Mantelfläche der Hülse bildet, der kleiner als 90° ist.

Zur Realisierung einer axialen und radialen Fixierung von Steckteil und Hülsenteil hintergreifen diese Bunde nach der Montage in axialer Richtung die Anschläge der mit diesen versehenen Endbereiche beider Bauelemente.

In vorteilhafter Weiterbildung der Erfindung kann auch einer der Bunde an einem Anschlag des Steckteils oder Hülsenteils anliegen und der entsprechend andere Bund des als Hülse ausgebildeten Sicherungselements den am Steck- oder Hülsenteil vorgesehenen Anschlag hintergreifen.

Weitere Vorteile und vorteilhafte Weiterbildungen der Erfindung sind Gegenstand der nachfolgenden Figuren sowie deren Beschreibungsteile.

### Es zeigen:

- Figur 1: eine schematische Darstellung einer Verbindung zwischen einem Geberzylinder und einem Fluidreservoir innerhalb einer hydraulischen Strecke,
- Figur 2: ein erfindungsgemäßes Sicherungselement in Form einer konisch geformten und geschlitzten Hülse,
- Figur 3: ein erfindungsgemäßes Sicherungselement in Form einer geschlitzten Scheibe,
- Figur 3a: die Seitenansicht des Sicherungselements gemäß Figur 3, die
- Figuren 4 bis 8: Verbindungsvarianten von Hülsen- und Steckteil mit zwischen beiden Bauteilen angeordnetem Sicherungselement,
- Figur 9: eine Verbindung eines Steckteils mit einem Hülsenteil mittels eines beide Bauteile umgreifenden erfindungsgemäßen Sicherungselementes,
- Figur 10: das Sicherungselement gemäß Figur 9 in einer Einzelteildarstellung,
- Figur 11: eine Schnittdarstellung der Figur 9,
- Figur 12: eine Schnittdarstellung einer Variante der Gestaltung der Endbereiche von Hülsen- und Steckteil, die mit einem Sicherungselement gemäß Figur 10 miteinander verbunden werden,
- Figuren 13 bis 21: weitere Gestaltungsmöglichkeiten eines ein Steck- und ein Hülsenteil umgreifendes Sicherungselements in Form unterschiedliche ausgeführter Drahtkörper,
- Figur 14: das erfindungsgemäße Sicherungselement gemäß Figur 13 in einer Einzeldarstellung und
- Figur 15: eine Schnittdarstellung gemäß Figur 13, stellvertretend für die Figuren 16, 18, 20, 22 und 24.

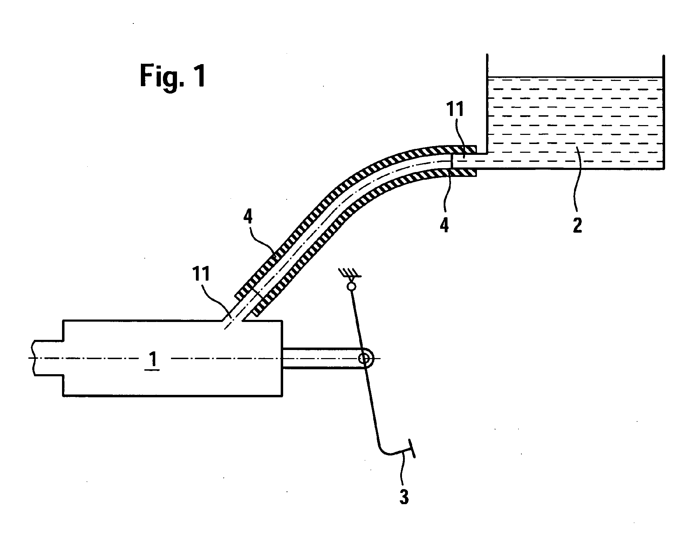

Für die Beschreibung der Figuren 1 bis 25 werden für gleiche Bauteile die gleichen Bezugszeichen verwandt.

Aus der Figur 1 ist ein Teilbereich einer hydraulischen Strecke eines Fahrzeuges schematisch dargestellt. Hieraus ist erkennbar, dass über eine Betätigungseinrichtung 3 ein Geberzylinder 1 mit Kraft beaufschlagbar ist. Ein Anschlussstutzen dieses Geberzylinders ist dabei als Steckteil 11 ausgebildet. Ebenso verfügt ein Fluidreservoir 2 über einen als Steckteil 11 ausgebildeten Anschlussstutzen. Diese beiden Anschlussstutzen 11 sind über eine als Hülsenteil ausgebildete Fluidleitung 4, die ein Rohr oder ein Schlauch sein kann, verbunden. Zur Realisierung einer abdichtenden und axialen Kräften standhaltenden Verbindung dient ein erfindungsgemäßes Verbindungselement 15 bzw. 26.

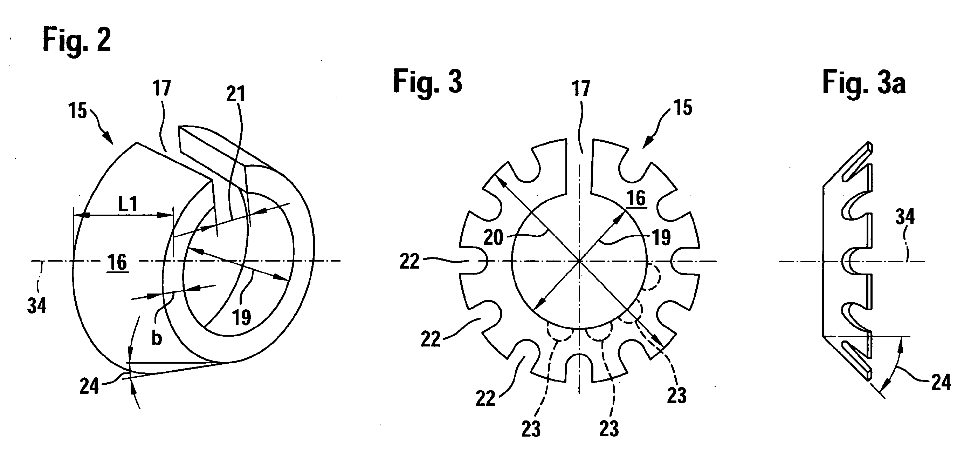

In der Figur 2 ist ein derartiges Verbindungselement 15 dargestellt. Dieses Verbindungselement 15 ist aus einem konisch geformten rotoationssymmetrischen Grundkörper 16 mit einer Dicke b und einer Rotationsachse 34 gebildet, dessen Mantelfläche einen Schlitz 17 mit einer Breite 21 aufweist. Weiterhin weist es einen Innendurchmesser 19 und einen Konuswinkel 24 auf. Seine axiale Ausdehnung L1 wird durch den Außendurchmesser 20 begrenzt.

Die Figur 3 zeigt eine weitere Ausgestaltung des erfindungsgemäßen Sicherungselements 15 in Form eines mit Ausnehmungen 22 versehenen Grundkörpers 16, dessen Dicke b so gering ist, dass er eine Scheibe darstellt. Dieses Sicherungselement 15 weist einen Innendurchmesser 19 und einen Außendurchmesser 20 auf. Zur Veränderung der Steifigkeit des Sicherungselements 15 ist in dieser Figur 3 eine weitere Möglichkeit aufgezeigt, die in gestrichelter Darstellung angedeutet ist. Diese Möglichkeit wäre am Innendurchmesser 19 ebenfalls Ausnehmungen 23 am Umfang verteilt anzuordnen. Ebenso wie in Figur 2 weist dieses Sicherungselement 15 eine Aussparung in Form eines Schlitzes 17 auf, der jedoch nicht zwingend erforderlich ist, da bereits durch die Aussparungen die geforderte Elastizität erreicht wird.

Die Figur 3a zeigt das Sicherungselement 15 aus Figur 3 in einer Seitenansicht, aus der die zur Rotationsachse 34 geneigte Mantelfläche erkennbar ist.

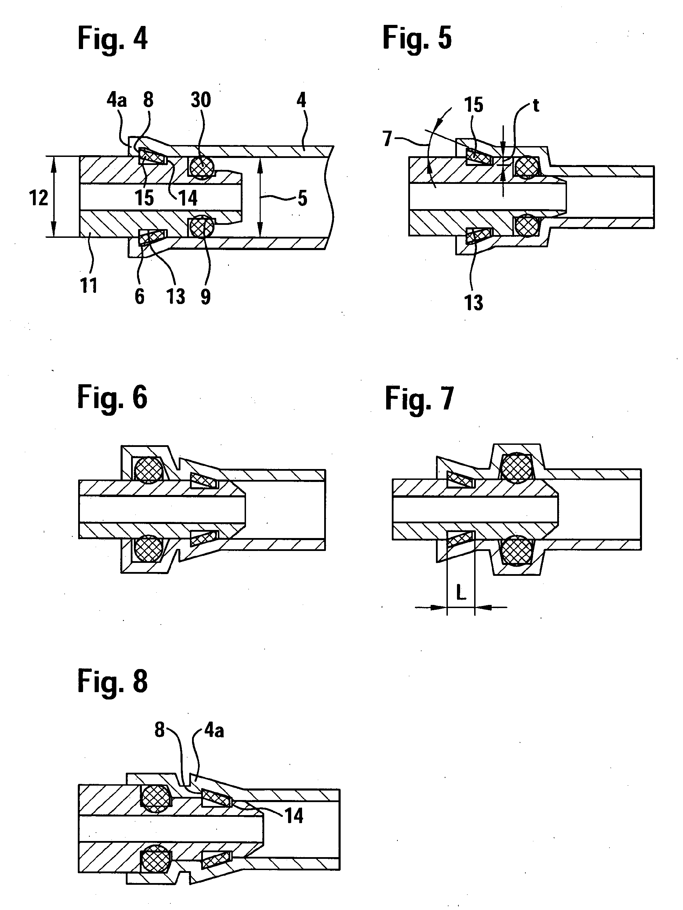

Die Figur 4 stellt eine Schnittdarstellung einer Verbindung eines Steckteils 11 mit einem Hülsenteil 4 mittels eines Sicherungselements 15 dar. Zur Erzielung einer axialen Kräften standhaltenden Verbindung, die zusätzlich eine Dichtwirkung erfüllt, ist der Endbereich des Steckteils 11 mindestens mit einer umlaufenden Nut 13 versehen. Durch die umlaufende Nut 13 mit einer Tiefe t wird eine Ringfläche gebildet, die als Anschlag 14 für mindestens eine Stirnfläche des Sicherungselements 15 dient. Die Tiefe t der Nut 13 ist dabei zur Bildung des Anschlages 14 der Dicke b des Grundkörpers 16 des Sicherungselements 15 anzupassen. Aus dieser Figur 4 ist weiterhin erkennbar, dass der Endbereich des Hülsenteils 4 eine Aufweitung 6 aufweist. Diese Aufweitung 6 hat die gleiche Breite L, die der Breite der Nut 13 angepasst ist. Außerdem weist diese Aufweitung 6 einen Konuswinkel 24 zur Rotationsachse 34 auf. An diese Aufweitung 6 schließt sich eine Durchmesserverringerung in Form eines Bundes 4a an, wodurch eine scheibenförmige Fläche entsteht, die einen Anschlag 8 für das Sicherungselement 15 bildet. Der Innendurchmesser des Bundes 4a ist dabei so ausgeführt, dass er mit dem Außendurchmesser des Steckteils 11 korrespondiert. Die Anschlagfläche 8 bzw. die Tiefe der Aufweitung 6 zur Bildung der Anschlagfläche ist dabei so zu wählen, dass sie maximal der Dicke b des Grundkörpers 16 entspricht. Vor der Montage beider Bauteile wird das Dichtelement 30 auf das Steckteil 11 aufgesetzt.

Aus den Figuren 5 bis 8 sind weitere Gestaltungsmöglichkeiten der Endbereiche von Steckteil 11 und Hülsenteil 4 im Verbindungsbereich bzw. deren Endbereich dargestellt. So ist beispielsweise in Figur 5 der Endbereich des Hülsenteils 4 stufenartig gestaltet, so dass nicht nur eine Aufweitung 6 zur Aufnahme des Sicherungselements 15 vorgesehen ist, sondern ebenso zur Aufnahme des Dichtelements 30 erweitert ist. Wichtig ist bei allen Figuren, dass durch Einschnürungen bzw. Erhebungen Anschlägen zwischen Steckteil 11 und Hülsenteil 4 erzeugt werden, die einerseits zur Aufnahme des Dichtelements 30 und des Sicherungselements 15 dienen wobei diese Anschläge im Bereich des Sicherungselements 15 gleichzeitig zur Realisierung einer Schnappverbindung dienen.

Bei den Figuren 4 bis 8 erfolgt die Montage vom Steckteil 11 mit dem Hülsenteil 4 dadurch, dass entweder das Dichtelement 30 in eine dafür vorgesehene Nut im Hülsenteil 4 eingelegt oder in eine Nut 9 des Steckteils 11 eingelegt und somit vormontiert wird. Allerdings kann das Dichtelement 30 auch ohne Nut 13 nur durch Reibung auf einem der Bauteile 4 und 11 gehalten werden. Weiterhin wird durch radiale Aufweitung das Sicherungselement 15 in die vorgesehene Nut 13 des Steckteils 11 eingelegt und somit ebenfalls vormontiert. Anschließend wird der Endbereich des Hülsenteils 4 über beide Bauteile 30 und 15 geschoben. Bei diesem Vorgang dient die Führungsfläche des Steckteils 11 und des Hülsenteils 4 für die konisch geformte Aufweitung 6 des Hülsenteils 4. Das bereits einen Konuswinkel 24 aufweisende Sicherungselement 15 wird beim Aufschieben des Hülsenteils 4 auf das Steckteil 11 in radialer Richtung zusammengepresst. Auf diese Weise wird dieses Sicherungselement 15 in radialer Richtung vorgespannt, wobei es mit seinen Stirnflächen jeweils am Anschlag 8 und am Anschlag 14 anliegt.

Diese Figuren 4 bis 8 stellen mögliche Ausgestaltungen zur Aufnahme eines Sicherungselements zwischen dem Steckteil 11 und dem Hülsenteil 4 dar.

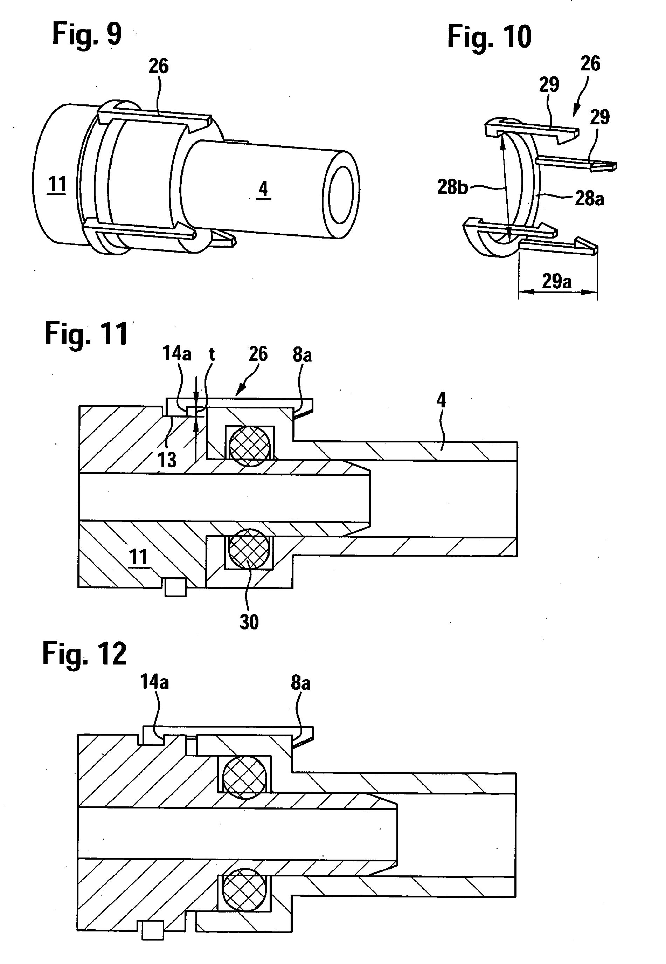

Die Figuren 9 bis 15 zeigen dagegen mögliche Ausführungsbeispiele für die Gestaltung eines Sicherungselements 26, das im Verbindungsbereich die Mantelflächen sowohl des Steckteils 11 als auch des Hülsenteils 4 ganz oder zumindest teilweise umhüllt. Somit zeigt die Figur 9 ein Sicherungselement 26, das einen ringförmigen Grundkörper 28a aufweist, an dem in axialer Richtung mehrere Rasthaken 29 am Umfang verteilt angeordnet sind. Dieses Sicherungselement 26 wird zuerst radial auf einem Bauteil montiert. Nach dem axialen Führen der Bauteile während bei Montage gewährleistet dieses deren axiale Fixierung.

Aus der Figur 10 ist dieses Sicherungselement 26 als Einzelteil dargestellt. Aus dieser Figur ist erkennbar, dass der ringförmige Grundkörper 28a C-förmig ausgebildet ist. Am Umfang dieses Grundkörpers 28a sind in axialer Richtung mehrere Rasthaken 29 verteilt angeordnet, die vorzugsweise mit dem Grundkörper 28a ein Teil bilden. Der Innendurchmesser 28b ist dabei so zu wählen, dass er dem Durchmesser des Steckteils 11 an der dafür vorgesehenen Aufnahmestelle angepasst ist.

Die Figur 11 stellt eine Schnittdarstellung der Verbindung aus Figur 9 dar. Aus dieser Figur 11 ist ersichtlich, dass zur Aufnahme des ringförmigen Grundkörpers 28a des Sicherungselements 26 das Steckteil 11 eine Nut 13 mit einer Tiefe t aufweist. Der Grundkörper 28a bildet mit seiner Ringfläche in radialer Richtung einen axialen Anschlag 14a an der Wand der Nut 13. Der Endbereich des Hülsenteils 4 ist hierbei so ausgebildet, dass durch die stufenartige Veränderung des Außendurchmessers ein Anschlag 8a gebildet wird. Zur Ausbildung dieser Stufe weist der Endbereich eine radiale Erweiterung zur Aufnahme eines Dichtelements 30 auf. Die Länge 29a der Rasthaken wird dabei bestimmt durch den Abstand der Anschläge 14a und 8a.

Die Figur 12 zeigt eine weitere mögliche Ausgestaltung des Endbereichs des Steckteils 11 und des Hülsenteils 4, wobei wiederum die gebildeten Anschläge 14a und 8a mit Hilfe des Sicherungselements 26 überbrückt werden.

Diese Gestaltungsvarianten können auf alle Verbindungen angewandt werden, bei denen zwei axial zu verbindende Bauteile 4 und 11 mittels eines Sicherungselements 26 umgriffen werden.

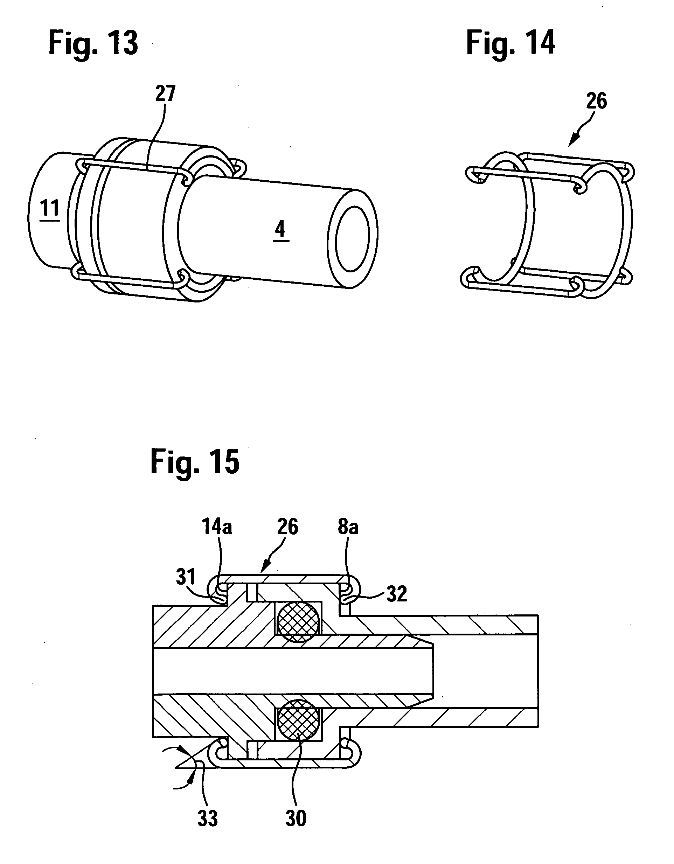

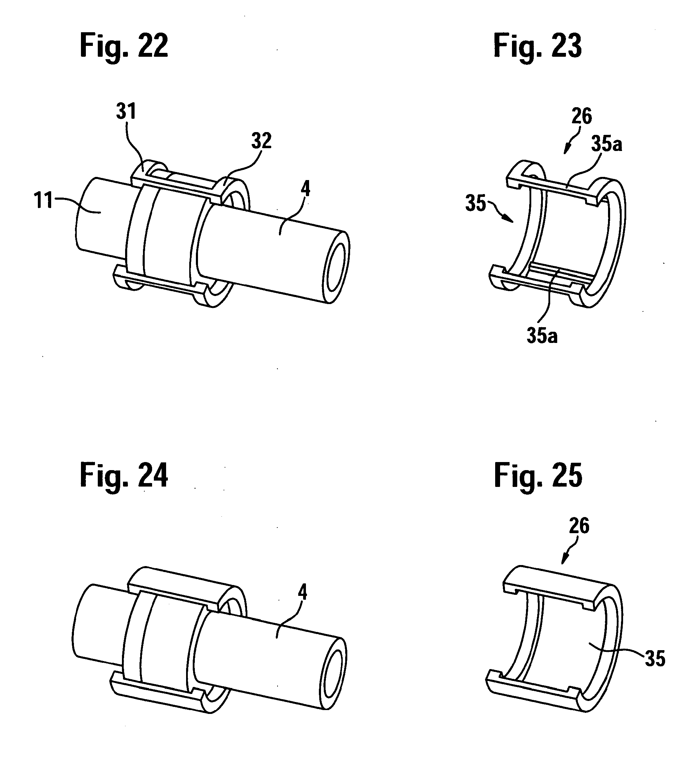

Weitere Möglichkeiten der Ausgestaltung diese Sicherungselements 26 zeigen die Figuren 13 bis 25 auf, wobei dieses in den Figuren 13 bis 21 als Drahtkörper 27 und in den Figuren 22 bis 25 als Kunststoffclip ausgeführt ist.

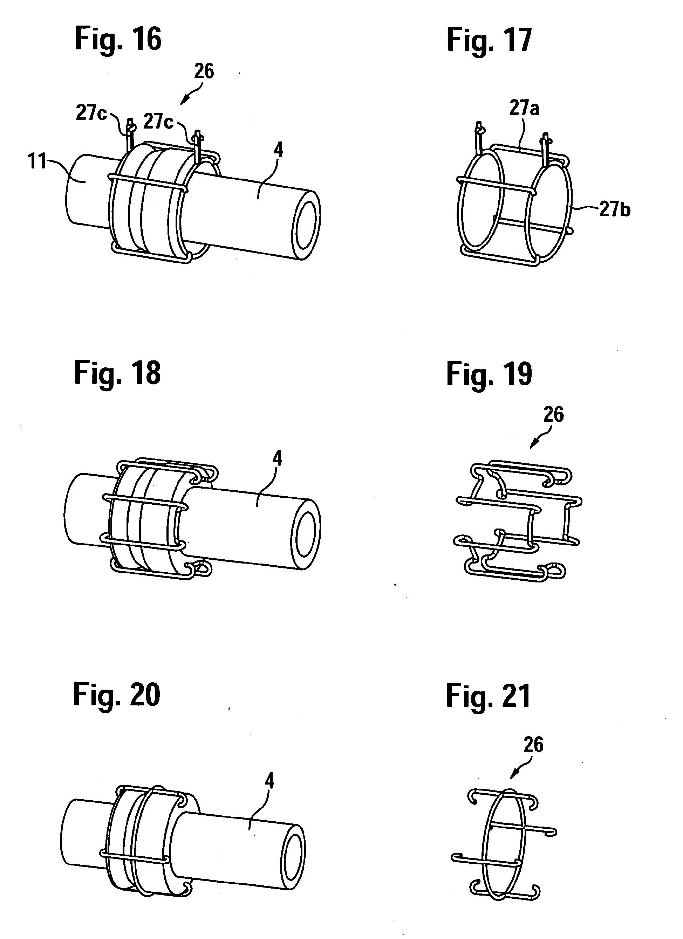

Dieser Drahtkörper 27 wird in den Figuren 13 bis 17 im Wesentlichen aus zwei parallel zueinander angeordneten Ringen bzw. Drähten 27b gebildet, die in sich geschlossen oder nicht geschlossen sind. Wenn sie nicht geschlossen sind bilden sie ein C, wie aus der Figur 14 hervorgeht. Mittels in axialer Richtung verlaufender Drähte 27a werden diese Drähte 27b zueinander beabstandet und gleichzeitig miteinander verbunden. Eine Besonderheit stellen die Figuren 16 und 17 dar. Hierbei weisen die Drähte 27b Verdrillenden 27c auf, mittels derer die jeweils einen Ring bildenden Enden der Drähte 27b durch Verdrillen miteinander verbunden werden können, wodurch ein anderes Verbindungsverfahren, wie Löten, entfallen kann.

Die Figuren 18 bis 21 zeigen Drahtkörper 27, bei denen das Sicherungselement 26 im Wesentlichen aus in axialer Richtung verlaufenden Drähten 27a gebildet wird, wobei die radiale Formgebung von mit diesen Drähten 27a in radialer Richtung verbundenen Teilstücken der Drähte 27b erfolgt. Die Länge der Drähte 27a ist dabei, wie auch in den oben beschriebenen Figuren, dem von dem Sicherungselement 26 axial zu überdeckenden Bereich abhängig und an diesen entsprechend angepasst. Eine besondere Form des Drahtkörpers wird in den Figuren 20 und 21 dargestellt. Hierbei dient nur ein in radialer Richtung verlaufender, in diesem Falle einen Ring bildender, Draht 27b zur Formgebung, auf dem über den Umfang verteilt mehrere Drähte 27a angeordnet sind. Vorzugsweise auf der halben Länge der Drähte 27a ist der Drahtring 27b mit diesen Drähten 27a verschweißt. Die Enden der Drähte 27a sind dabei in Richtung Rotationsachse 34 der Bauteile 4 und 11 hakenförmig gebogen, so dass bei der Montage dieses Sicherungsrings 26 zur Erzielung eines Clip-Effektes eine Vorspannung erzeugt wird.

Die Figur 15 zeigt die Verbindung gemäß Figur 13 in einer Schnittdarstellung. Diese Schnittdarstellung zeigt die zu verbindenden Bauteile 4 und 11 mit der zwischen liegenden Dichtung 30 mit dem den Umfang der Verbindung umgreifenden Verbindungselement 26 und ist stellvertretend für die Figuren 13 bis 25.

Aus dieser Figur 15 sind deutlich die jeweils endseitig zu Bunden 31, 32 umgebogenen Enden der Drähte 27a zu erkennen, die dazu dienen, einerseits über den Anschlag 14a des Steckteils 11 und andererseits über den Anschlag 8a des Hülsenteils 4 zu schnappen. Dazu weisen sie einen Winkel 33 auf, wodurch die bereits erwähnte Vorspannung in axialer Richtung auf beide Anschläge 8a und14a erzeugt wird.

Die Figuren 22 bis 25 zeigen das Sicherungselement 26 in Form eines Kunststoff-Clips 35. Dieser kann entweder einen hülsenförmigen Grundkörper aufweisen, wie in den Figuren 24 und 25 dargestellt, oder aus einzelnen Stegen 35a gebildet werden. Im Querschnitt weist dieser Clip 35 die Form eines "C"'s auf. Sowohl der Grundkörper als auch die Stege 35a werden in axialer Richtung durch Bunde 31, 32 begrenzt. Diese Bunde 31, 32 dienen dazu, dass bei der endgültigen Montage, bei der das Hülsenteil 4 über den Endbereich des mit dem Dichtelement 30 vormontierten Steckteils 11 geschoben wird, der Clip 35 in axialer Richtung über die beiden Anschläge 8a und14a von Steckteil 11 und Hülsenteil 4 schnappt und diese damit umgreift. Somit wird eine Verbindung sowohl in radialer als auch in axialer Richtung hergestellt.

### Bezugszeichenliste

- 1: Geberzylinder
- 2: Fluidreservoir
- 3: Betätigungseinrichtung
- 4: Hülsenteil (Endbereich Fluidleitung- Rohr / Schlauch)
- 4a: Bund / Einschnürung
- 5: Innendurchmesser
- 6: Aufweitung
- 7: Winkel der Aufweitung
- 8: Anschlag
- 8a: Anschlag
- 9: Ringnut für Dichtungsaufnahme
- 10: Rastwulst
- 11: Steckteil (Anschlussstutzen)
- 12: Außendurchmesser
- 13: Ausnehmung / Nut / Sicherungsbereich
- 14: Anschlag
- 14a: Anschlag
- 15: inneres Sicherungselement
- 16: Grundkörper
- 17: Schlitz
- 18: Schlitzbreite
- 19: Innendurchmesser
- 20: Außendurchmesser
- 21: Breite
- 22: äußere Ausnehmungen im Sicherungselement
- 22a: Steg
- 23: innere Ausnehmungen im Sicherungselement
- 23a: Steg
- 24: Konuswinkel
- 25: Ringnase
- D: großer Durchmesser
- 26: äußeres Sicherungselement
- 27: Drahtkörper
- 27a: in axialer Richtung verlaufende Drähte
- 27b: in radialer Richtung verlaufende Drähte
- 27 c: Verdrillenden
- 28a: ringförmiger Grundkörper
- 28b: Durchmesser Ringkörper
- 29: Rasthaken
- 29a: Länge der Rasthaken
- 30: Dichtelement
- 31: Bund
- 32: Bund
- 33: Winkel
- 34: Rotationsachse
- 35: Clip
- 35a: Steg
- b: Dicke des Grundkörpers
- t: Nuttiefe
- L: Nutbreite
- L1: axiale Ausdehnung des Sicherungselements

## Patentansprüche

1. Sicherungselement zur Verbindung von Leitungen, insbesondere Leitungen für Kupplungsausrück- und Bremssysteme in Fahrzeugen, bei denen ein Endbereich als Hülsenteil (4) und ein Endbereich als rotationssymmetrisches Steckteil (11) ausgebildet und am Steckteil (11) über einen Sicherungsbereich (13) mindestens ein Anschlag (14) definiert wird, der zumindest einem am Hülsenteil (4) vorgesehenen Anschlag (8) axial beabstandet ist und entweder der Endbereich des Hülsenteils (4) oder des Steckteils (11) ein Dichtelement (30) aufweist, **dadurch gekennzeichnet, dass** mit Hilfe eines Sicherungselements (15) eine Verbindung zwischen dem Innendurchmesser (5) des Hülsenteils (4) und dem Außendurchmesser des Sicherungsbereichs (13) des Steckteils (11) hergestellt wird, wobei das Sicherungselement (15) an dem mindestens einen Anschlag (8) des Hülsenteils (4) und an dem mindestens einen Anschlag (14) des Steckteils (11) anliegt.

2. Sicherungselement nach Anspruch 1, **dadurch gekennzeichnet, dass** dieses aus einem geschlitzten, scheibenförmigen Grundkörper (16) mit einem an den Außendurchmesser des Sicherungsbereichs (13) des Steckteils (11) angepassten Innendurchmesser (19) gebildet wird und aus elastischem Material besteht und die Mantelfläche des Sicherungselementes (15) einen Konuswinkel (24) zur Rotationsachse (34) bildet.

3. Sicherungselement nach Anspruch 1 und 2, **dadurch gekennzeichnet, dass** das Sicherungselement (15) am Außendurchmesser (20) über mehrere Ausnehmungen (22) verfügt, die über diesen verteilt angeordnet sind.

4. Sicherungselement nach Anspruch 1 und 2, **dadurch gekennzeichnet, dass** das Sicherungselement (15) am Innendurchmesser (19) über mehrere Ausnehmungen verfügt, die über diese verteilt angeordnet sind.

5. Sicherungselement nach Anspruch 3 und 4, **dadurch gekennzeichnet, dass** die Ausnehmungen (22, 23) jeweils schlitz- bzw. zacken- oder halbkreisförmig ausgebildet sind.

6. Sicherungselement nach Anspruch 4, **dadurch gekennzeichnet, dass** die Summe der verbleibenden Stege (23a) mit der Größe des Außendurchmessers des Sicherungsbereichs (13) des Steckteils (11) korrespondiert.

7. Sicherungselement nach Anspruch 3 und 4, **dadurch gekennzeichnet, dass** die Ausnehmungen (23) am Innendurchmesser (19) des Sicherungselements (15) zu den Ausnehmungen (22) am Außendurchmesser (20) des Sicherungselements (15) jeweils auf dem gleichen Radius angeordnet und entgegengesetzt gerichtet sind.

8. Sicherungselement nach Anspruch 3 und 4, **dadurch gekennzeichnet, dass** jeweils eine Ausnehmung (23) am Innendurchmesser (19) des Sicherungselements (15) einem Steg (22a) zwischen zwei Ausnehmungen am Außendurchmesser (20) des Sicherungselements zugeordnet ist.

9. Sicherungselement nach Anspruch 2, **dadurch gekennzeichnet, dass** es aus einem metallischen Werkstoff hergestellt ist.

10. Sicherungselement nach Anspruch 2, **dadurch gekennzeichnet, dass** es aus einem organischen Werkstoff, wie Kunststoff, hergestellt ist.

11. Sicherungselement nach Anspruch 1, **dadurch gekennzeichnet, dass** dessen Grundkörper (16) aus einer in Längsrichtung aufgeschnittenen, konisch geformten Hülse gebildet wird, wobei der Konuswinkel (24) im Bereich von 10° und 40° liegt.

12. Sicherungselement nach Anspruch 11, **dadurch gekennzeichnet, dass** die Breite (21) des Schlitzes (17) so gewählt ist, dass der Durchmesser (D) des verbleibenden Mantels dem Außendurchmesser des Sicherungsbereichs (13) des Steckteils (11) angepasst ist.

13. Sicherungselement nach Anspruch 11, **dadurch gekennzeichnet, dass** dieses aus Kunststoff besteht.

14. Sicherungselement zur Verbindung von Leitungen, insbesondere Leitungen für Kupplungsausrück- und Bremssysteme in Fahrzeugen, bei denen ein Endbereich als Hülsenteil (4) und ein Endbereich als rotationssymmetrisches Steckteil (11) ausgebildet und am Steckteil (11) mindestens ein Anschlag (14a) vorgesehen ist, der zumindest einem am Hülsenteil (4) vorgesehenen Anschlag (8a) axial beabstandet ist und entweder der Endbereich des Hülsenteils (4) oder der des Steckteils (11) ein Dichtelement (30) aufweist, **dadurch gekennzeichnet, dass** mit Hilfe eines Sicherungselements (26) eine Verbindung zwischen dem Anschlag (8a) des Hülsenteils (4) und dem Anschlag (14a) des Steckteils (11) hergestellt wird.

15. Sicherungselement nach Anspruch 14, **dadurch gekennzeichnet, dass** das Sicherungselement (26) aus einem Drahtkörper (27) besteht.

16. Sicherungselement nach Anspruch 14, **dadurch gekennzeichnet, dass** dieses aus einem ringförmigen Grundkörper (28a) gebildet wird, von dessen Stirnseite mehrere Rasthaken (29) in axialer Richtung verlaufen.

17. Sicherungselement nach Anspruch 14, **dadurch gekennzeichnet, dass** der Innendurchmesser des Grundkörpers (28a) dem größten Durchmesser von Hülsenteil (4) und/oder Steckteil (11) angepasst ist.

18. Sicherungselement nach Anspruch 14, **dadurch gekennzeichnet, dass** dieses aus einer in Längsrichtung geschlitzten, aus elastischem Material bestehenden Hülse gebildet wird.

19. Sicherungselement nach Anspruch 18, **dadurch gekennzeichnet, dass** dieses Sicherungselement (26) beidseitig über nach innen gerichtete verlaufende Bunde (31, 32) verfügt, wobei mindestens einer dieser Bunde (31) oder (32) zur Erzeugung einer Vorspannung im Winkel zur Mantelfläche der Hülse (26) angeordnet ist, der kleiner als 90° ist.

20. Sicherungselement nach den Ansprüchen 14 und 19, **dadurch gekennzeichnet, dass** diese Bunde (31, 32) in axialer Richtung die Anschläge (8a) und (14a) hintergreifen.

21. Sicherungselement nach den Ansprüchen 14 und 19, **dadurch gekennzeichnet, dass** einer der Bunde (31) oder (32) am Anschlag (8) oder am Anschlag (14) anliegt und der andere Bund (32) oder (31) den Anschlag (8a) oder (14a) hintergreift.
